# EUROPEAN PATENT APPLICATION

(11) **EP 4 755 721 A1**
(43) Date of publication of application: **10.06.2026**
(21) Application number: 24862056.9
(22) Date of filing: 06.09.2024
(51) Int. Cl.: B60R 11/02, B60R 1/00

(54) **VEHICLE**

(30) Priority: 08.09.2023 CN 202311154319
(71) Applicant: Fuyao Glass Industry Group Co., Ltd., Fuqing, Fujian 350300 (CN)
(72) Inventor: HE, Changlong, Fuzhou, Fujian 350300 (CN); ZHANG, Jianming, Fuzhou, Fujian 350300 (CN); WANG, Wenhai, Fuzhou, Fujian 350300 (CN); ZHANG, Canzhong, Fuzhou, Fujian 350300 (CN)
(74) Representative: Mewburn Ellis LLP
(86) International application number: PCT/CN2024/117320
(87) International publication number: WO 2025/051218

(57) **Abstract**

A vehicle (1) is provided. The vehicle (1) includes a vehicle body (10), a dashboard (12), a front windshield (20), and a panoramic display screen (30). The vehicle body (10) includes a bodyshell (11) and a vehicle-body front opening (13). The dashboard (12) is disposed in an internal space of the bodyshell (11). The front windshield (20) is mounted in the vehicle-body front opening (13), and is angled relative to the dashboard (12). The panoramic display screen (30) has a bottom end (301) and a top end (302) opposite to the bottom end (301). The bottom end (301) is fixed on the dashboard (12). The top end (302) is away from the dashboard (12) and is close to the front windshield (20). A distance D between the top end (302) and the front windshield (20) satisfies: D ≤ 150 mm. In the vehicle (1), by positioning a display content of the panoramic display screen (30) between a dashboard surface and a transparent field-of-view region of the front windshield 20, a line of sight of a driver can leave a road surface less frequently, thereby greatly enhancing driving safety. In addition, a viewing distance of the display content is more user-friendly, thereby further improving an immersive driving experience.

## Description

### CROSS-REFERENCE TO RELATED APPLICATION(S)

This application claims priority to Chinese Patent Application No. 202311154319.5, filed with the China National Intellectual Property Administration on September 08, 2023 and entitled "VEHICLE", the entire disclosure of which is hereby incorporated by reference.

### TECHNICAL FIELD

This disclosure relates to the field of vehicle display, and in particular, to a vehicle.

### BACKGROUND

Vehicles are one of the important means of transportation for humans. With the advent of the era of intelligent network connectivity for automobiles, vehicles can provide various types of information to occupants, such as vehicle information, road information, advanced driving assistance system (ADAS), social media information, etc. Generally, such information can be displayed by head-up displays (HUD and augmented reality head-up display (ARHUD)), instrument clusters, center consoles, central control displays, front passenger displays, etc., and a combination thereof, to enable multi-form and multi-level displays at different distances, thereby bringing a more comfortable, safe, and intelligent experience and rich information presentation to occupants.

However, the instrument cluster, the central control display, or the front passenger display is generally disposed on a dashboard and positioned closer to the front-row occupant. Due to the short viewing distance and space layout, the viewing angles of the screens are not ideal, so that the following may happen. For example, the occupant may need to lower or turn their head to view the display information, causing their line of sight to briefly leave a road, which may pose additional safety risks. Under certain situations, some screens are prone to strong reflective glare, resulting in unclear display. The head-up display mainly functions by projecting an image through reflection on a front windshield, and a projection distance generally is relatively far. As a result, a virtual image may be subject to distortion to a certain extent, and be easily superimposed and confused with real-world objects in the forward field of view, leading to insufficient contrast. Particularly under rainy conditions or in congested and complex traffic situations, it is difficult to quickly distinguish some display information, especially small-font text.

### SUMMARY

The present disclosure provides a vehicle. The vehicle includes a vehicle body, a dashboard, a front windshield, and a panoramic display screen. The vehicle body includes a bodyshell and a vehicle-body front opening. The dashboard is disposed in an internal space of the bodyshell. The front windshield is mounted in the vehicle-body front opening, and is angled relative to the dashboard. The panoramic display screen has a bottom end and a top end opposite to the bottom end. The bottom end is fixed on the dashboard. The top end is away from the dashboard and is close to the front windshield. A distance D between the top end and the front windshield satisfies: D ≤ 150 mm.

In embodiments, the panoramic display screen further has a front display surface and a back light-shielding surface facing away from the front display surface. The back light-shielding surface faces towards the front windshield. The front display surface faces away from the front windshield. The front display surface has an effective display region. The effective display region is located above the dashboard.

In embodiments, the back light-shielding surface is black. The panoramic display screen has a visible light transmittance less than or equal to 1%.

In embodiments, the front windshield includes a lower light-shielding layer. The lower light-shielding layer is close to the dashboard. The lower light-shielding layer has a visible light transmittance less than or equal to 5%.

In embodiments, the lower light-shielding layer has an upper boundary and a lower boundary opposite to the upper boundary. The lower boundary is close to the dashboard. The upper boundary is close to the top end of the panoramic display screen. A distance between the upper boundary and an upper surface of the dashboard is greater than or equal to a distance between the top end of the panoramic display screen and the upper surface of the dashboard.

In embodiments, the panoramic display screen has a curved surface structure and is convex towards the front windshield. The distance D between the top end and the front windshield satisfies: D ≤ 100mm, or D ≤ 50mm, or D ≤ 30mm, or D ≤ 20mm, or D ≤ 10mm, or D ≤ 5mm.

In embodiments, in a width direction of the bodyshell, the panoramic display screen has a central region and an end region located at opposite ends of the central region. A radius of curvature of the central region is greater than a radius of curvature of the end region.

In embodiments, the radius of curvature of the end region ranges from 300 mm to 1500 mm. The radius of curvature of the central region ranges from 1500 mm to 10000 mm.

In embodiments, the panoramic display screen has a first end and a second end opposite to the first end in a width direction of the bodyshell. The first end at least exceeds a plane that both passes through a first eye-position and is parallel to a forward direction of the vehicle. The second end at least exceeds a plane that both passes through a second eye-position and is parallel to the forward direction of the vehicle. The first eye-position is an eye position of an occupant at a first driving seat inside the bodyshell. The second eye-position is an eye position of the occupant at a second driving seat inside the bodyshell.

In embodiments, the panoramic display screen has multiple display partitions arranged in a width direction of the bodyshell. The panoramic display screen is provided with display units in each of the multiple display partitions. Display units in different display partitions are independently operatable.

In embodiments, the panoramic display screen further has at least one transition region. Each of the at least one transition region is disposed between two adjacent display partitions of the multiple display partitions, and a part of the panoramic display screen at the transition region has a minimum radius of curvature less than 300 mm, or less than 200 mm, or less than 100 mm.

In embodiments, each of the multiple display partitions has at least one display function. Display functions of the multiple display partitions are switchable with one another. The display function includes at least one of providing an indirect field of view, providing vehicle status information, providing a window of an in-vehicle intelligent assistant, and providing social media and intelligent office information.

In embodiments, the panoramic display screen further includes a support member. The support member is fixedly connected to the panoramic display screen and the vehicle body, or the support member is movably connected to the panoramic display screen and the vehicle body.

In embodiments, in a vertical plane passing through a reference eye point of a driver and parallel to a forward direction of the vehicle, an angle between a line connecting a midpoint of the effective display region and the reference eye point of the driver and a horizontal line is a look down angle *α.* The look down angle *α* satisfies: *α* ≤ -5°, or *α* ≤ -8°, or *α* ≤ -10°.

In embodiments, the effective display region has a top edge and a bottom edge opposite to the top edge. The bottom edge is closer to the dashboard than the top edge. In a vertical plane passing through a reference eye point of a driver and parallel to a forward direction of the vehicle, an angle defined by a line connecting the top edge and the reference eye point of the driver and a line connecting the bottom edge and the reference eye point of the driver is a visible angle *θ*. The visible angle *θ* satisfies: *θ* ≥ 0.5°, or *θ* ≥ 3°, or *θ* ≥ 5°.

In embodiments, in a plane passing through a reference eye point of a driver and parallel to a forward direction of the vehicle, an angle between the effective display region and a horizontal line is an attitude angle *β*. The attitude angle *β* satisfies: 45° ≤ *β* ≤ 150°, or 70° ≤ *β* ≤ 125°, or 75° ≤ *β* ≤ 100°.

In embodiments, the panoramic display screen further includes a buffer portion. The buffer portion is disposed between the panoramic display screen and the front windshield. The buffer portion has a hardness SHORE-A satisfying: SHORE-A ≤ 90.

In embodiments, light emitted by the panoramic display screen includes at least one of P-polarized light, circularly polarized light, and non-polarized light. When the light emitted by the panoramic display screen includes the P-polarized light, the P-polarized light accounts for at least 30% of the light emitted by the panoramic display screen.

In embodiments, the panoramic display screen further includes an optical coating. The optical coating is disposed on the front display surface of the panoramic display screen. The optical coating includes at least one of an anti-reflective coating, an anti-fingerprint coating, an anti-glare coating, and a composite coating composed of a 1/4 phase retardation plate and a linear polarizing coating that are stacked.

In embodiments, the front windshield has a transparent region. The transparent region includes at least one head-up display region. The vehicle further includes a head-up display system. The head-up display system is configured to project a head-up display image onto the head-up display region.

The vehicle provided in the present disclosure is configured with the panoramic display screen disposed on the dashboard, so that the display content is positioned between the dashboard surface of the vehicle and the transparent field-of-view region of the front windshield, thereby providing stable and clear images for occupants. Compared with the conventional instrument cluster display, the line of sight of the driver can leave the road surface less frequently, thereby greatly improving driving safety. In addition, the viewing distance of the display content is more user-friendly, thereby further improving the immersive driving experience.

### BRIEF DESCRIPTION OF THE DRAWINGS

To illustrate the technical solutions of embodiments of the present disclosure more clearly, the following briefly introduces accompanying drawings used in implementations. Apparently, the accompanying drawings in the following description are some implementations of the present disclosure. For those of ordinary skill in the art, other accompanying drawings can also be obtained from these accompanying drawings without creative efforts.
FIG. 1 is a schematic structural view of a vehicle provided in the present disclosure.
FIG. 2 is a partial schematic structural view of an interior of a vehicle according to a first implementation of the present disclosure.
FIG. 3 is a schematic side view of a front windshield and a panoramic display screen in FIG. 2.
FIG. 4 is a first partial schematic cross-sectional view of the front windshield and the panoramic display screen in FIG. 2.
FIG. 5 is a schematic front view of the panoramic display screen observed from a negative direction of an X-axis in FIG. 2.
FIG. 6 is a schematic top view of the panoramic display screen in FIG. 5.
FIG. 7 is a partial schematic structural view of an interior of a vehicle according to a second implementation of the present disclosure.
FIG. 8 is a partial schematic structural view of an interior of a vehicle according to a third implementation of the present disclosure.
FIG. 9 is a schematic front view of a first effective display region observed from the negative direction of the X-axis in FIG. 2.
FIG. 10 is a schematic top view of the first effective display region in FIG. 9.
FIG. 11 is a schematic front view of a second effective display region observed from the negative direction of the X-axis in FIG. 2.
FIG. 12 is a schematic top view of the second effective display region in FIG 11.
FIG. 13 is a schematic front view of a third effective display region observed from the negative direction of the X-axis in FIG. 2.
FIG. 14 is a schematic front view of a fourth effective display region observed from the negative direction of the X-axis in FIG. 2.
FIG. 15 is a block diagram of internal electrical connections of a display screen provided in an implementation of the present disclosure.
FIG. 16 is a second partial schematic cross-sectional view of the front windshield and the panoramic display screen in FIG. 2.
FIG. 17 is a third partial schematic cross-sectional view of the front windshield and the panoramic display screen in FIG. 2.
FIG. 18 is a fourth partial schematic cross-sectional view of the front windshield and the panoramic display screen in FIG. 2.
FIG. 19 is a partial schematic structural view of an interior of a vehicle according to a fourth implementation of the present disclosure.

Description of reference signs of the accompanying drawings: vehicle 1; vehicle body 10; bodyshell 11; dashboard 12; vehicle-body front opening 13; first A-pillar 14; second A-pillar 15; front windshield 20; light-shielding layer 21; upper boundary 211; lower boundary 212; transparent region 22; head-up display region 221; panoramic display screen 30; bottom end 301; top end 302; front display surface 303; back light-shielding surface 304; effective display region 31; top edge 311; bottom edge 312; central region 313; end region 314; first end 315; second end 316; display partition 317; display unit 3171; image block 3172; physical spacing region 318; transition region 319; electronic control unit 320; support member 32; buffer portion 33; decorative portion 34; optical coating 35; head-up display system 40; central control screen 50.

### DETAILED DESCRIPTION

The following will clearly and completely describe technical solutions of embodiments of the present disclosure with reference to the accompanying drawings in embodiments of the present disclosure. Apparently, embodiments described herein are merely some embodiments, rather than all embodiments, of the present disclosure. Based on the embodiments of the present disclosure, all other embodiments obtained by those of ordinary skill in the art without creative effort shall fall within the protection scope of the present disclosure.

The terms such as "first", "second", etc., in the specification, the claims, and the above accompanying drawings of the present disclosure are used to distinguish different objects, rather than describing a particular order. In addition, the terms "including", "comprising", and "having" as well as variations thereof are intended to cover non-exclusive inclusion. For example, a process, method, system, product, or device including a series of steps or units is not limited to the listed steps or units, on the contrary, it may alternatively include other steps or units that are not listed; alternatively, other steps or units inherent to the process, method, product, or device may be included either.

The term "embodiment" or "implementation" referred to herein means that particular features, structures, or properties described in conjunction with embodiments or implementations may be defined in at least one embodiment of the present disclosure. The phrase "embodiment" or "implementation" appearing in various places in the specification does not necessarily refer to the same embodiment or an independent or alternative embodiment that is mutually exclusive with other embodiments. Those skilled in the art will understand expressly and implicitly that an embodiment described in the present disclosure may be combined with other embodiments.

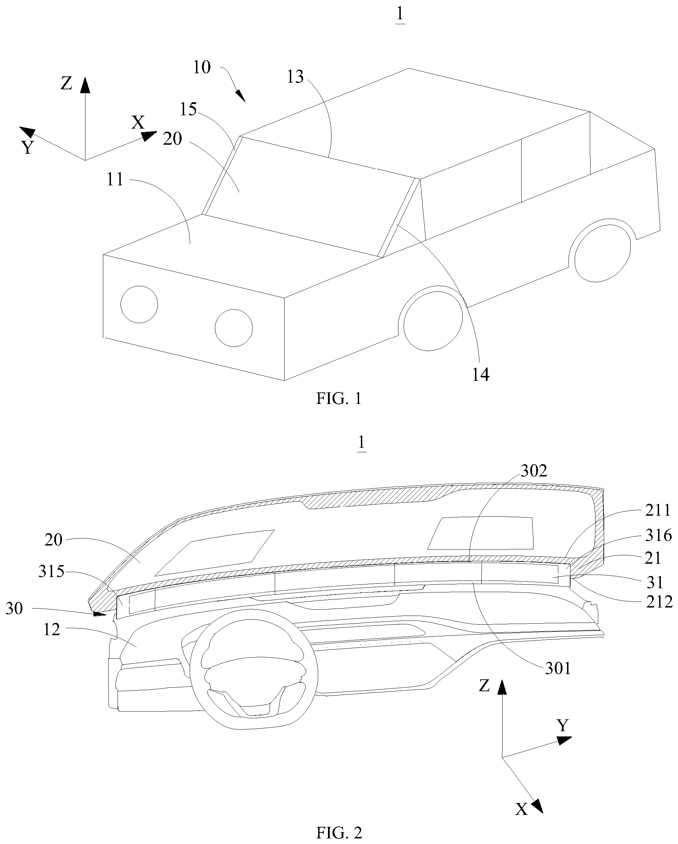

The present disclosure provides a vehicle 1. Reference can be made to FIG. 1 to FIG. 3. The vehicle 1 includes a vehicle body 10, a dashboard 12, a front windshield 20, and a panoramic display screen 30. The vehicle body 10 includes a bodyshell 11 and a vehicle-body front opening 13. The vehicle-body front opening 13 is defined on the bodyshell 11. The dashboard 12 is disposed in an internal space of the bodyshell 11. The front windshield 20 is mounted in the vehicle-body front opening 13. The front windshield 20 is angled relative to the dashboard 12. An angle between the front windshield 20 and the dashboard 12 is substantially equal to an installation angle of the front windshield 20. The installation angle of the front windshield 20 is an angle between the front windshield 20 and the horizontal plane when the front windshield 20 is in an installed state, indicating an inclination degree of the front windshield 20. The installation angle typically ranges from 18° to 45°, such as 25°, 30°, 35°, 40°, etc.

The front windshield 20 has a light-shielding layer 21 and a transparent region 22. The light-shielding layer 21 is arranged around a peripheral edge region of the front windshield 20. A region of the front windshield 20 where the light-shielding layer 21 is disposed has a relatively low visible light transmittance. The light-shielding layer 21 is configured to shield and protect the in-vehicle components, thereby preventing the in-vehicle components from being aged and damaged caused by being directly exposed to sunlight, so as to improve the service life of the in-vehicle components. In addition, the light-shielding layer 21 can also shield the in-vehicle components to ensure the overall aesthetic appearance from the external view. The light-shielding layer 21 may be a dark ink layer or a colored polymer coating, and can be formed by printing ink or other methods. Alternatively, the light-shielding layer 21 may selected from a dark resin coating having a relatively low light transmittance. Of course, the light-shielding layer 21 may also be selected from a light-colored resin coating having a relatively low light transmittance. The resin coating may, for example, be made of body-colored polyvinyl butyral (PVB), polyethylene terephthalate (PET), etc. The transparent region 22 is a central region of the front windshield 20 where no light-shielding layer 21 is disposed. The transparent region 22 has a relatively high visible light transmittance that meets safety standards. Preferably, the visible light transmittance of the transparent region 22 is greater than or equal to 70%.

The light-shielding layer 21 includes an upper light-shielding layer, a left light-shielding layer, a right light-shielding layer, and a lower light-shielding layer. The upper light-shielding layer is located in the top region of the front windshield 20, the left light-shielding layer is located in the left region of the front windshield 20, the right light-shielding layer is located in the right region of the front windshield 20, and the lower light-shielding layer is located in the bottom region of the front windshield 20. The visible light transmittance of each of the upper light-shielding layer, the left light-shielding layer, and the right light-shielding layer is less than or equal to 1%, or even substantially equal to 0, that is, being opaque. The lower light-shielding layer is disposed close to the dashboard 12. The visible light transmittance of the lower light-shielding layer is less than or equal to 5%, preferably less than or equal to 3%, more preferably less than or equal to 1%, or even substantially equal to 0, that is, being opaque.

The panoramic display screen 30 has a bottom end 301 and a top end 302 opposite to the bottom end 301. The bottom end 301 is fixed on the dashboard 12. The top end 302 is away from the dashboard 12 and close to the front windshield 20. A distance D between the top end 302 and the front windshield 20 satisfies: D ≤ 150 mm. The panoramic display screen 30 further has a front display surface 303 and a back light-shielding surface 304 facing away from the front display surface 303. The front display surface 303 faces away from the front windshield 20. The back light-shielding surface 304 faces towards the front windshield 20. The front display surface 303 has an effective display region 31. The effective display region 31 is located above the dashboard 12. In the present disclosure, the panoramic display screen 30 is disposed on the dashboard 12, so that the display content is positioned between the dashboard surface of the vehicle and the transparent field-of-view region of the front windshield 20, thereby providing stable and clear images for occupants. Compared with the conventional instrument cluster display, the line of sight of the driver can leave the road surface less frequently, thereby greatly improving driving safety. In addition, the viewing distance of the display content is more user-friendly, thereby further improving the immersive driving experience.

In some specific implementations, the color of the light-shielding layer 21 is the same as the color of the back light-shielding surface 304, for example, both are black, or both are tan, or both are brown, so as to improve the overall appearance consistency of the vehicle 1. The visible light transmittance of the panoramic display screen is less than or equal to 1%, or even substantially equal to 0, that is, being opaque, so as to improve the display effect of the effective display region 31.

A coordinate system is defined for the vehicle 1, in which a driving direction of the vehicle 1 is designed as an X-axis, a width direction of the vehicle 1 is designed as an Y-axis, and a height direction of the vehicle 1 is designed as an Z-axis, so that the coordinate system XYZ constitutes the coordinate system of the vehicle 1. In the present disclosure, a positive direction of the X-axis corresponds to an opposite direction of a forward direction of the vehicle 1, a positive direction of the Y-axis corresponds to the width direction from the left side to the right side with respect to the forward direction of the vehicle 1, and a positive direction of the Z-axis corresponds to a direction from the ground towards the sky.

The panoramic display screen 30 is disposed in the internal space of the vehicle body 11, above the dashboard 12 and close to the front windshield 20. The panoramic display screen 30 has the effective display region 31. The effective display region 31 faces towards the occupant and provides observable and readable display information. Further, the effective display region 31 is located above the dashboard 12, so as to enable the occupant to observe and read the display information on the effective display region 31 without lowering their head.

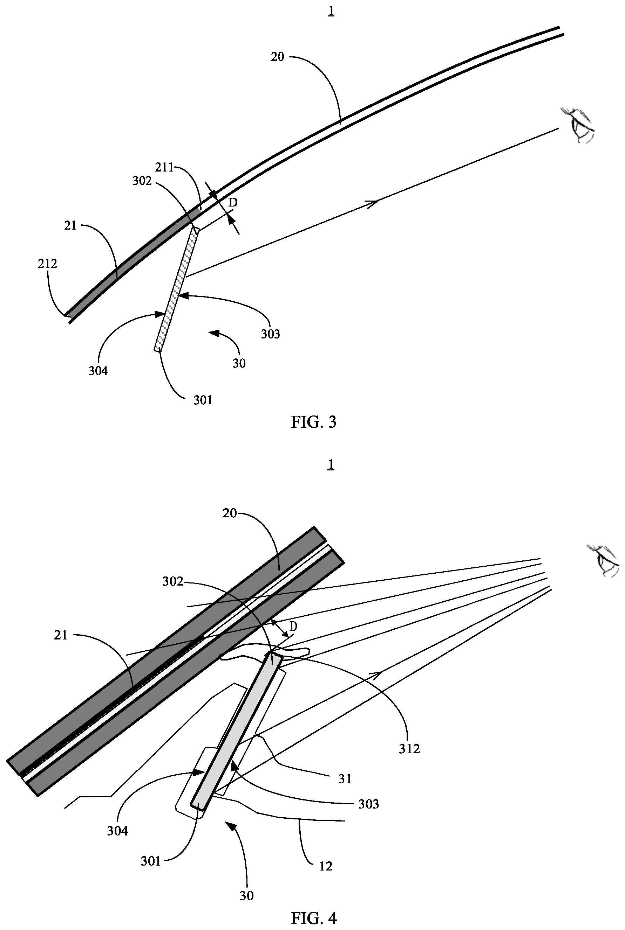

In the present disclosure, the front windshield 20 has a laminated glass structure, specifically including inner glass, outer glass, and an adhesive layer. The adhesive layer is used to connect the inner glass and the outer glass. The light-shielding layer 21 can be disposed on the inner glass, the outer glass, and/or the adhesive layer. Specifically, as illustrated in FIG. 4, the light-shielding layer 21 is disposed on a surface of the outer glass close to the adhesive layer. Of course, the light-shielding layer 21 may also be disposed on a surface of the inner glass close to the adhesive layer, or disposed on a surface of the inner glass facing away from the adhesive layer.

In some specific implementations, the back light-shielding surface 304 of the panoramic display screen 30 is black. The panoramic display screen 30 has a visible light transmittance of 0. Since the panoramic display screen 30 is disposed close to the bottom of the front windshield 20, the lower light-shielding layer of the light-shielding layer 21 can be adaptively set to a reduced height to lower the cost.

In other specific implementations, the lower light-shielding layer has an upper boundary 211 and a lower boundary 212 opposite to the upper boundary 211. The lower boundary 212 is close to the dashboard 12. The upper boundary 211 is close to the top end 302 of the panoramic display screen 30. The lower light-shielding layer of the light-shielding layer 21 is used to shield the panoramic display screen 30, thereby avoiding problems such as an incongruous appearance when observed from the outside of the vehicle. Preferably, a distance between the upper boundary 211 and an upper surface of the dashboard 12 is greater than or equal to a distance between the top end 302 and the upper surface of the dashboard 12. The lower light-shielding layer may also serve as a secondary background when the panoramic display screen 30 is observed from the inside of the vehicle, so that the panoramic display screen 30 appears more harmoniously and aesthetically integrated with surrounding components such as an instrument panel and the light-shielding layer 21, thereby reducing, to a certain extent, the interference of stray light from the external environment of the vehicle on the effective display region 31.

In the present disclosure, the panoramic display screen 30 extends in the Y-axis direction. The panoramic display screen 30 is disposed above the dashboard 12 and close to the lower light-shielding layer. The panoramic display screen 30 in the present disclosure has a larger available layout space. In addition, since the layout position of the panoramic display screen 30 in the present disclosure is relatively higher, there is no need to excessively lower the head to observe the display information on the panoramic display screen 30, resulting in a better viewing angle of the screen. Compared with the conventional head-up display, the panoramic display screen 30 in the present disclosure is not affected by the brightness of the external environment of the vehicle and has an independent display effect, and the display image and the display background have a higher contrast. Meanwhile, the panoramic display screen 30 and the front windshield 20 in the present disclosure are independent from each other, so that the panoramic display screen 30 can be avoided from having an excessively inclined angle together with the front windshield 20. Therefore, the panoramic display screen 30 can be set at a better inclination angle to obtain a larger layout space between the front windshield 20 and the dashboard 12 and a more comfortable viewing angle, thereby increasing an area of the effective display region 31 and enriching the display content, and further preventing phenomena such as dimness and color shift when the occupant in the vehicle 1 observes the panoramic display screen 30.

Optionally, the information input of the panoramic display screen 30 may come from internal and external systems such as a vehicle operating system (VOS), various sensors, various camera systems, an entertainment system, mobile phone signals, radio signals, etc.

Reference can be made to FIG. 4. In the observation direction of human eyes, both the panoramic display screen 30 and the lower light-shielding layer are located outside the field-of-view B exclusion region of the front windshield 20, so as to prevent the panoramic display screen 30 from blocking the field of view in front of the vehicle 1 during the driving process of the driver. The human eyes refer to eyes of the driver when the driver is in the driving seat inside the vehicle body 11. The field-of-view B exclusion region of the front windshield 20 is determined according to the regulations of GB9656 and/or ECE R43.

Optionally, the top end 302 of the panoramic display screen 30 is configured in a non-flush manner, so as to enlarge the display range of the panoramic display screen 30 according to the actual design requirements. Most of the region of the top end 302 is shielded by the lower light-shielding layer. Preferably, at least 55% of the section of the top end 302 is shielded by the lower light-shielding layer, that is, at least 55% of the section of the top end 302 does not exceed the upper boundary 211 of the lower light-shielding layer in the Z-axis direction. More preferably, at least 60% of the section of the top end 302 is shielded by the lower light-shielding layer, at least 70% of the section of the top end 302 is shielded by the lower light-shielding layer, at least 80% of the section of the top end 302 is shielded by the lower light-shielding layer, at least 90% of the section of the top end 302 is shielded by the lower light-shielding layer, or 100% of the section of the top end 302 is shielded by the lower light-shielding layer.

Reference can be made to FIG. 1, FIG. 2, FIG. 4 again. The front windshield 20 has a curved surface structure and is convex outwards in the negative direction of the X-axis, so as to reduce the drag coefficient of the entire vehicle, improve the strength against external impact, and achieve overall harmony and aesthetic appearance. In some specific implementations, the panoramic display screen 30 may have a flat-plate structure. In other specific implementations, the panoramic display screen 30 may have a curved surface structure and is convex outwards in the negative direction of the X-axis, that is, is convex towards the front windshield 20, so that the panoramic display screen 30 has a surrounding arc-shaped structure similar to that of the front windshield 20, which is beneficial to improving the harmony when the driver observes the panoramic display screen 30, thereby improving the experience and comfort of the driver.

Further, to meet the integrity requirements of an intelligent cockpit, the panoramic display screen 30 has an elongated strip-shaped structure, that is, a ratio of the width of the panoramic display screen 30 to the height of the panoramic display screen 30 is greater than or equal to 2. Specific examples of the ratio include 2, 3, 5, 8, 10, 12, 15, 20, etc. More preferably, the ratio is greater than or equal to 5, and even more preferably, the ratio is greater than or equal to 10. The width of the panoramic display screen 30 refers to a distance by which the panoramic display screen 30 extends in the Y-axis direction. The width of the panoramic display screen 30 is preferably at least 500 mm. Specific examples of the width include 500 mm, 600 mm, 700 mm, 800 mm, 900 mm, 1000 mm, 1100mm, etc. More preferably, the width of the panoramic display screen 30 is substantially consistent with the width of the front windshield 20, so as to form a through-type panoramic effect from A-pillar to A-pillar. The height of the panoramic display screen 30 refers to a distance by which the panoramic display screen 30 extends in the Z-axis direction. The height of the panoramic display screen 30 preferably ranges from 30 mm to 250 mm. Specific examples of the height include 30 mm, 50 mm, 80 mm, 100 mm, 150 mm, 200 mm, 250 mm, etc., which facilitates convenient observation by the human eyes without blocking the driving view, and is also suitable for installation on the dashboard 12.

Further, the distance D between the top end 302 and the front windshield 20 satisfies: D ≤ 100 mm, or D ≤ 50 mm, or D ≤ 30 mm, or D ≤ 20 mm, or D ≤ 10 mm, or D ≤ 5 mm, so as to increase the distance between the panoramic display screen 30 and the human eyes, further facilitating human eye observation, and also helping to use the lower light-shielding layer 21 as a secondary background to improve the display effect.

Optionally, the distance between the top end 302 and the front windshield 20 is designed to be non-uniform. Specifically, the shape matching design is carried out according to the shape of the front windshield 20, the vehicle-body front opening 13 and other structures, so as to improve the design aesthetics of the panoramic display screen 30 and the usage experience of the driver.

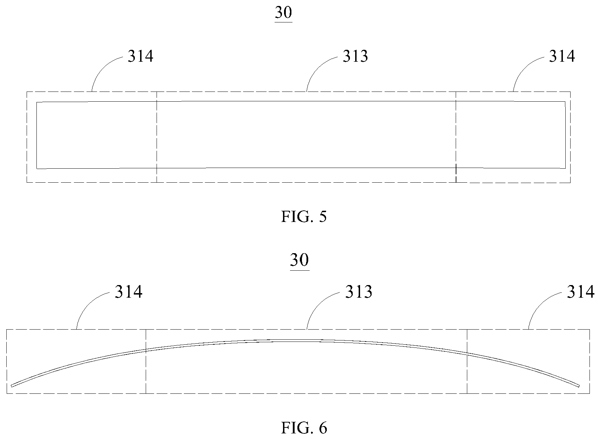

Reference can be made to FIG. 1, FIG. 2, FIG. 5, and FIG. 6. In the width direction of the vehicle body 11 (i.e., the Y-axis direction), the panoramic display screen 30 has a central region 313 and an end region 314 located at opposite ends of the central region 313. A radius of curvature of the central region 313 is greater than a radius of curvature of the end region 314.

In this implementation, the radius of curvature of the central region 313 is greater than the radius of curvature of the end portion, so that the curvature of the end portion can better conform to and match the shape surface of the front windshield 20 located closer to the A-pillar. In addition, the greater radius of curvature of the central region 313 makes the central region 313 flatter, which is beneficial for the driver to observe the display information displayed on the panoramic display screen 30 and is beneficial to reducing the difficulty in production and manufacturing.

Optionally, the radius of curvature of the end region 314 ranges from 300 mm to 1500 mm, and the radius of curvature of the central region 313 ranges from 1500 mm to 10000 mm. For example, the radius of curvature of the end region 314 may be, but is not limited to, 300 mm, 600 mm, 900 mm, 1200 mm, 1500 mm, or other values between 1200 mm and 1500 mm. The radius of curvature of the central region 313 may be 1500 mm, 3000 mm, 4500 mm, 6000 mm, 7500 mm, 9000 mm, 10000 mm, or other values between 1500 mm and 10000 mm.

Optionally, different values of the radius of curvature may exist at various positions of the end region 314, which are specifically designed according to the actual installation requirements. Different values of the radius of curvature may exist at various positions of the central region 313, which are specifically designed according to the actual installation requirements.

Reference can be made to FIG. 2, and FIG. 4 to FIG. 6 again. In this implementation, the panoramic display screen 30 is curved in the width direction of the vehicle body 11.

Reference can be made to FIG. 1 and FIG. 2 again. In this implementation, the vehicle body 10 further includes a first A-pillar 14 and a second A-pillar 15. The first A-pillar 14 and the second A-pillar 15 are disposed at both ends of the vehicle-body front opening 13 in the width direction of the vehicle body 11. The panoramic display screen 30 has a first end 315 and a second end 316 opposite to the first end 315. The first end 315 is disposed close to the first A-pillar 14, the second end 316 is disposed close to the second A-pillar 15, and the panoramic display screen 30 continuously extends from the first A-pillar 14 to the second A-pillar 15, so that a panoramic display is visually presented to the driver, thereby improving the driving experience.

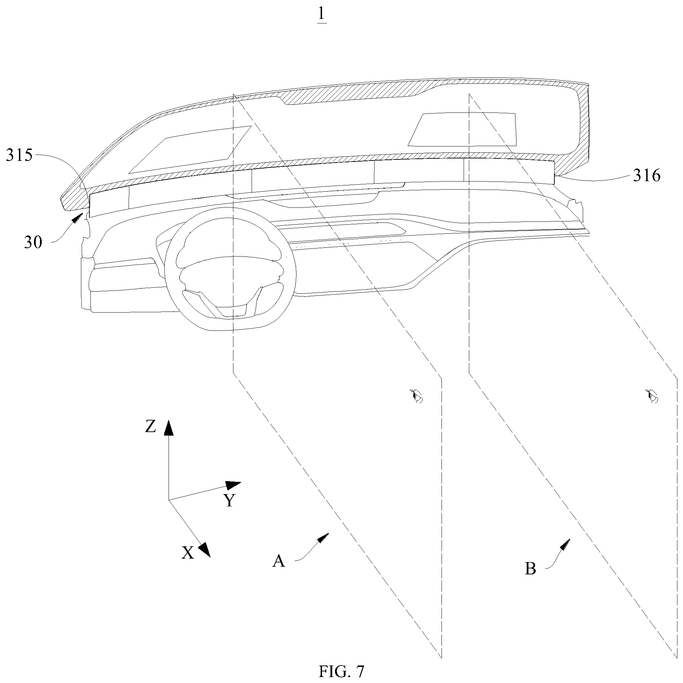

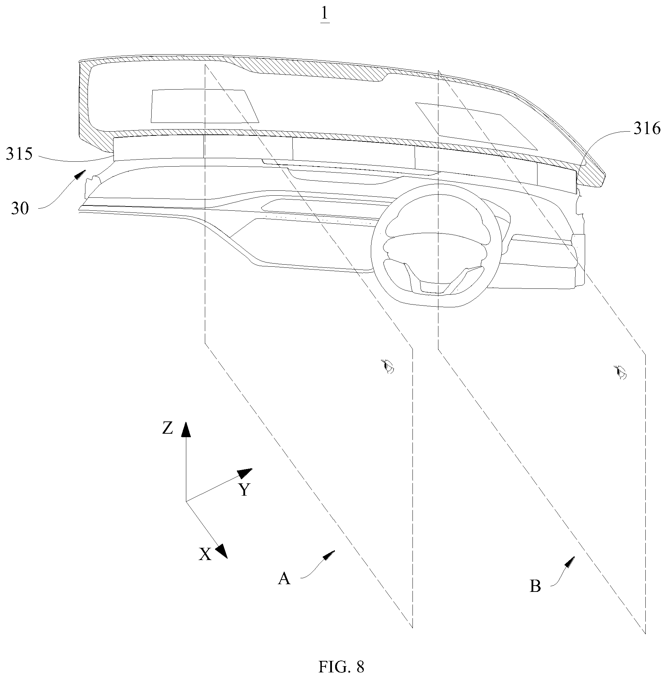

Reference can be made to FIG. 7 and FIG. 8. A plane passing through a first eye-position and parallel to the forward direction of the vehicle 1 is located between the first end 315 and the second end 316. A plane passing through a second eye-position and parallel to the forward direction of the vehicle 1 is located between the first end 315 and the second end 316. Here, the first eye-position is an eye position of an occupant at the first driving seat inside the vehicle body 11, and the second eye-position is an eye position of the occupant at the second driving seat inside the vehicle body 11. The first driving seat is a driver seat and the second driving seat is a passenger seat, or the first driving seat is the passenger seat and the second driving seat is the driver seat.

In this implementation, the first driving seat is the driver seat and the second driving seat is the passenger seat, or the first driving seat is the passenger seat and the second driving seat is the driver seat. The first eye-position is the eye position of the occupant at the first driving seat inside the vehicle body 11, and the second eye-position is an eye position of the occupant at the second driving seat inside the vehicle body 11.

For illustrative purposes, the first driving seat is taken as the driver seat and the second driving seat is taken as the passenger seat. The plane A passing through the first eye-position and parallel to the XZ plane is located between the first end 315 and the second end 316, that is, the first end 315 at least exceeds the plane A. The plane B passing through the second eye-position and parallel to the XZ plane is located between the first end 315 and the second end 316, that is, the second end 316 at least exceeds the plane B. Therefore, the field of view, towards the negative direction of the X-axis, of the occupant at each of the first driving seat and the second driving seat can fall within the display range of the panoramic display screen 30, thereby improving the experience of the occupant when observing the panoramic display screen 30.

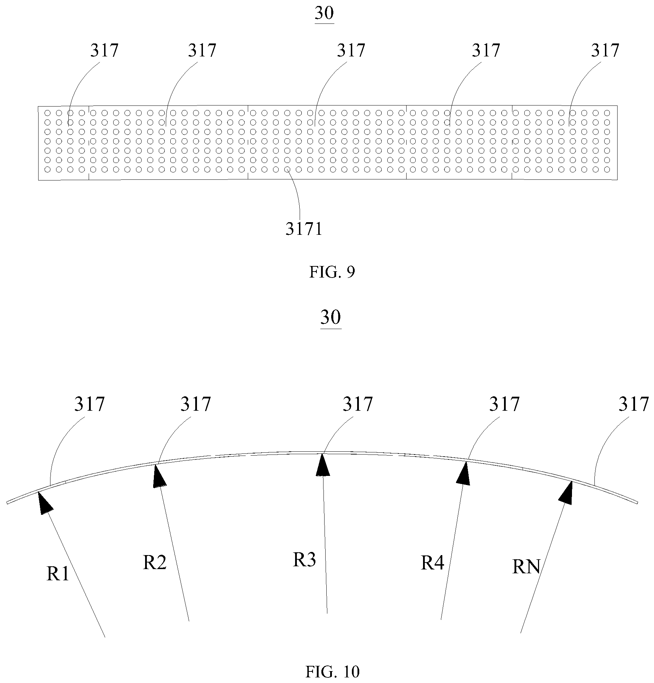

Reference can be made to FIG. 1, FIG. 2, FIG. 9, and FIG. 10. The effective display region 31 of the panoramic display screen 30 has multiple display partitions 317 arranged in the width direction of the vehicle body 11. The effective display region 31 is provided with display units 3171 in each of the multiple display partitions 317. Display units 3171 in different display partitions 317 are independently operatable, so that the same or different physical display units 3171 can be used to display or turn off according to the input image source signal. Various display partitions 317 are configured to display different display information to improve the display richness of the effective display region 31, thereby improving the usage experience.

For example, one display partition 317 may be displayed by a thin-film-transistor liquid-crystal display (TFT-LCD) display unit 3171, another display partition 317 is displayed by a micro light-emitting diode (MicroLED) display unit 3171, yet another display partition 317 is displayed by a mini light-emitting diode (MiniLED) display unit 3171, and still another display partition 317 is displayed by a micro organic light-emitting diode (MicroOLED) display unit 3171. Alternatively, the multiple display partitions 317 may be displayed all by TFT-LCD display units 3171 or MicroLED display units 3171, etc.

Optionally, the size of each display partition 317 can be designed according to actual requirements. For example, a display partition 317 for displaying important information can be designed larger. For illustration, assuming that the effective display region 31 includes four display partitions 317, in the positive direction of the Y-axis, the length ratio of the four display partitions 317 is 1:3:2:2 or other ratios.

In other implementations, the effective display region 31 has multiple display partitions 317 in the vertical direction of the panoramic display screen 30. That is, when observed from the perspective of the driver towards the panoramic display screen 30, multiple display partitions 317 are arranged in an upper-lower distribution, so as to improve the display richness of the panoramic display screen 30 and thus provide a better usage experience.

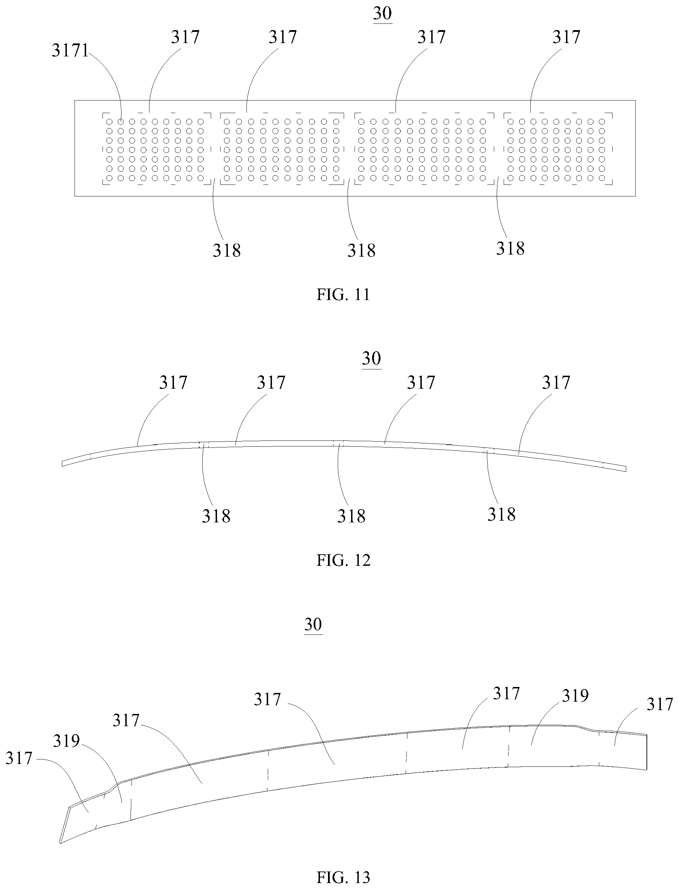

Reference can be made to FIG. 1, FIG. 2, FIG. 11, and FIG. 12. The panoramic display screen 30 also has a physical spacing region 318. The physical spacing region 318 is arranged between two adjacent display partitions 317, and the display units 3171 are arranged to avoid the physical spacing region 318. No display unit 3171 is arranged in the physical spacing region 318, and the physical spacing region 318 is unable to display, so as to separate two adjacent display partitions 317, avoid light interference between two adjacent display partitions 317, and improve the display effect.

Reference can be made to FIG. 1, FIG. 2, and FIG. 13. The panoramic display screen 30 also has at least one transition region 319. The transition region 319 is disposed between two adjacent display partitions 317 of the multiple display partitions 317. A part of the panoramic display screen 30 at the transition region 319 has a minimum radius of curvature less than 300 mm, or less than 200 mm, or less than 100 mm. The transition region 319 is disposed between two adjacent display partitions 317 with a step difference or an excessively large curvature variation, serving as a locally sharp bend manufactured to meet the requirements of different shapes or rapidly changing spatial curved surfaces, so as to avoid distortion of the display image in the transition region 319. For example, in the end region 314 of the panoramic display screen 30 close to the A-pillar, two adjacent display partitions 317 are on different planes and have a step difference, and can be bridged by means of the transition region 319.

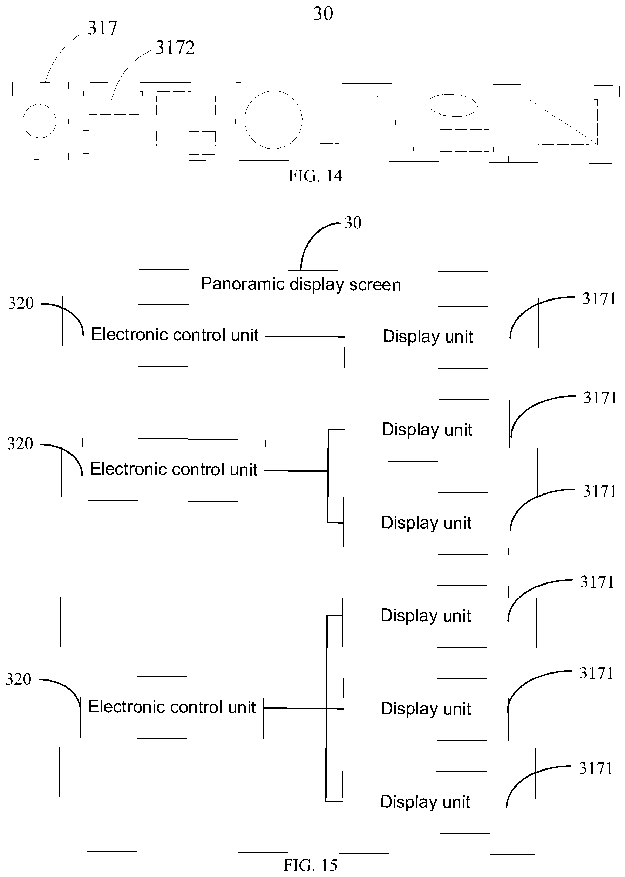

Reference can be made to FIG. 14. The display partition 317 includes multiple image blocks 3172. Different image blocks 3172 are used to display different images. In at least one display partition 317, a single display partition 317 includes multiple image blocks 3172, and different image blocks 3172 can display different images, thereby further improving the richness of the panoramic display screen 30. Further, there is a non-display region between two adjacent image blocks 3172 to form a division on the screen, so as to improve the distinction of image display and thus improve the usage experience. It may be noted that FIG. 14 is only for illustration, and does not limit the number, shape, position, etc., of the image blocks 3172 in each display partition 317.

Reference can be made to FIG. 15. The panoramic display screen 30 includes at least one electronic control unit 320. Each electronic control unit 320 is electrically connected to at least one display unit 3171, and is used for controlling display of the display unit 3171. Each electronic control unit 320 includes a power supply portion and a control unit. Each electronic control unit 320 can power and control the display unit 3171 of one display partition 317 separately, or one electronic control unit 320 can power and control display units 3171 of multiple display partitions 317. The independent operation of each display partition 317 is realized by means of the at least one electronic control unit 320. It may be noted that FIG. 15 is only for illustration, and does not limit the number of display units 3171 electrically connected to each electronic control unit 320, nor does it limit the number of electronic control units 320.

Reference can be made to FIG. 1, FIG. 2, FIG. 9, and FIG. 10 again. In this implementation, each display partition 317 has at least one display function. Display functions of the multiple display partitions 317 are switchable with one another, so as to realize the diversification of display functions. Optionally, the display functions include at least one of providing an indirect field of view (e.g., functions of an electronic exterior rear-view mirror, (e.g., camera monitor mirror, CMS), a transparent A-pillar, etc.), providing vehicle status information (e.g., battery level, vehicle speed, engine speed, mileage, gear, turn signal, high beam, seat belt reminder, low fuel/battery level, steering mode, driving mode, etc.), providing a window for an in-vehicle intelligent assistant (e.g., vehicle 1 elf, virtual character/cartoon), and providing social media and intelligent office information (e.g., display, answering, and rejection of incoming calls while driving, social communication information, WeChat^{™}, text messages, emails, voice/video conferences, weather information, radio information). Preferably, the functions of the CMS and the transparent A-pillar are preferably provided in two display partitions 317 at both ends of the panoramic display screen 30 in the Y-axis direction, so that the viewing angle layout can be better viewed and the driving experience can be improved.

In this implementation, the content information displayed by various display partitions 317 and the positions of information presentation can be custom-adjusted according to actual applications, user requirements, etc. For example, one of the display partitions 317 can be configured to provide a field of view within an external front blind region of the vehicle 1 after the vehicle 1 is powered on, and provide an external rear field of view of the vehicle 1 during a period after the vehicle 1 is started but before the vehicle 1 starts moving. In addition, the user of the vehicle 1 can switch, according to his/her own habits, the sequence of providing field of view, and/or the position of providing field of view among the multiple display partitions 317, for example, from one display partition 317 to another display partition 317.

Reference can be made to FIG. 1, FIG. 2, FIG. 9, and FIG. 10 again. In this implementation, in a direction from the center of the panoramic display screen 30 to each of both ends of the panoramic display screen 30 in the width direction of the vehicle body 11, radii of curvature of the panoramic display screen 30 at multiple display partitions 317 gradually decrease.

In this implementation, in a direction parallel to the Y-direction and from the center of the panoramic display screen 30 to each of the both ends of the panoramic display screen 30, curvatures of the panoramic display screen 30 at the multiple display partitions 317 gradually decrease. That is, a radius of curvature at a display partition 317 near the center of the panoramic display screen 30 is greater than a radius of curvature at a display partition 317 away from the center of the panoramic display screen 30. Therefore, the curvature of the panoramic display screen 30 near the center of the panoramic display screen 30 changes more smoothly, so as to improve the comfort of observing the panoramic display screen 30, and the both ends of the panoramic display screen 30 can adapt to the change of the shape surface near the A-pillar, so as to improve the aesthetic appearance. In addition, the radius of curvature at each point within each display partition 317 can also be a variable value to adapt to the specific vehicle model design. For example, taking the radius of curvature at the middle position of a display partition 317 as the radius of curvature of the display partition 317, in the Y-direction, if the radii of curvature of multiple display partitions 317 are R1, R2, R3, R4, RN in sequence, then R1 < R2 < R3 and R3 > R4 > RN.

Reference can be made to FIG. 1, FIG. 2, and FIG. 16. The panoramic display screen 30 further includes a support member 32. The support member 32 is fixedly connected to the panoramic display screen 30 and the vehicle body 10. In another implementation, the panoramic display screen 30 further includes a support member 32. The support member 32 is movably connected to the panoramic display screen 30 and the vehicle body 10. The support member 32 is configured to adjust the position and posture of the panoramic display screen 30. When the support member 32 is fixedly connected to the panoramic display screen 30 and the vehicle body 10, the support member 32 can provide stable support for the panoramic display screen 30. When the support member 32 is movably connected to the panoramic display screen 30 and the vehicle body 10, the support member 32 can adjust the position and posture of the panoramic display screen 30 (such as up-and-down lifting, rotating posture, etc.), so that the panoramic display screen 30 can provide a more flexible position and display angle, thereby adapting to drivers with different driving habits and different heights, and improving the adaptability of the panoramic display screen 30. Optionally, one end of the support member 32 is connected to the panoramic display screen 30, and the other end of the support member 32 is connected to the vehicle body 11 and/or the dashboard 12.

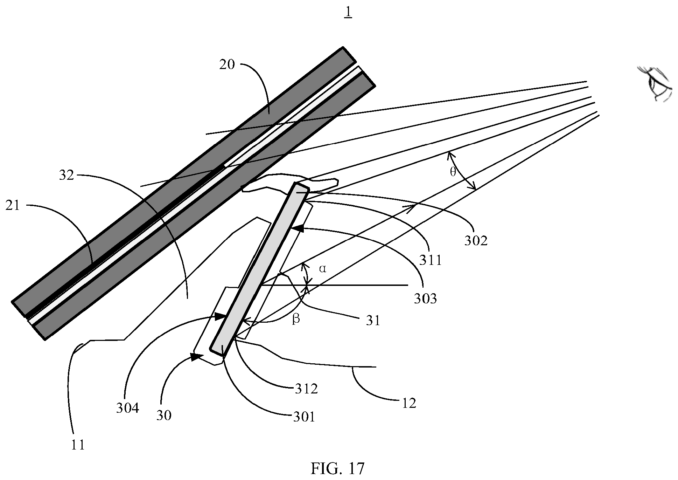

Reference can be made to FIG. 1 and FIG. 17. In a vertical plane (i.e., the XZ plane) passing through a reference eye point of a driver and parallel to the forward direction of the vehicle 1, an angle between a line connecting a midpoint of the effective display region 31 and the reference eye point of the driver and a horizontal line is a look down angle *α*, and the look down angle *α* satisfies: *α* ≤ -5°, or *α* ≤ -8°, or *α* ≤ -10°. The negative sign indicates that the human eye is looking downward. When the absolute value of the look down angle *α* is greater, the position of the display information viewed by the driver within the effective display region 31 is lower. For example, the look down angle *α* may be, but is not limited to, -5°, -6°, -7°, -8°, -9°, -10°, -11°, -12°, -13°, -14°, -15°, etc. Preferably, the look down angle *α* satisfies: -12° ≤ *α* ≤ -8°, which can prevent the display information in the effective display region 31 from being positioned too high and thus prevent interfering with driving, and can also ensure that the driver can observe without excessive head lowering. The reference eye point of the driver is defined according to the standard GB 15084.

Optionally, the effective display region 31 has a top edge 311 and a bottom edge 312 opposite to the top edge 311. The bottom edge 312 is closer to the dashboard 12 than the top edge 311. In a plane passing through the reference eye point of the driver and parallel to the forward direction of the vehicle 1, an angle defined by a line connecting the top edge 311 and the reference eye point of driver and a line connecting the bottom edge 312 and the reference eye point of the driver is a visible angle *θ*, and the visible angle *θ* satisfies: *θ* ≥ 0.5°, or *θ* ≥ 3°, or *θ* ≥ 5°. Therefore, the panoramic display screen 30 has a larger displayable range, thereby improving the usage experience of the panoramic display screen 30. For example, the visible angle *θ* may be, but is not limited to, 0.7°, 1.0°, 1.5°, 2°, 2.5°, 3°, 3.5°, 4°, 5°, 6°, 7°, 8°, etc. Preferably, the visible angle *θ* satisfies: 1.5° ≤ *θ* ≤ 5°.

Optionally, in a vertical plane passing through the reference eye point of the driver and parallel to the forward direction of the vehicle 1, an angle between the effective display region 31 and the horizontal plane is an attitude angle *β*, and the attitude angle *β* satisfies: 45° ≤ *β* ≤ 150°. Therefore, the influence of strong light from outside the vehicle 1 reflected on the panoramic display screen 30 can be reduced, in particular, preventing the influence of the reflected sunlight at noon, thereby avoiding excessive reflection and glare caused by reflection of such light from the panoramic display screen 30 into the human eye, while also preventing or reducing the damage to components inside the panoramic display screen 30 caused by direct strong light. For example, the attitude angle *β* may be limited to 45°, or 65°, or 85°, or 105°, or 115°, or 125°, or 135°, or 145°, or 150°, or other values between 45° and 150°. Preferably, the attitude angle *β* satisfies: 70° ≤ *β* ≤ 125°. More preferably, the attitude angle *β* satisfies: 75° ≤ *β* ≤ 100°.

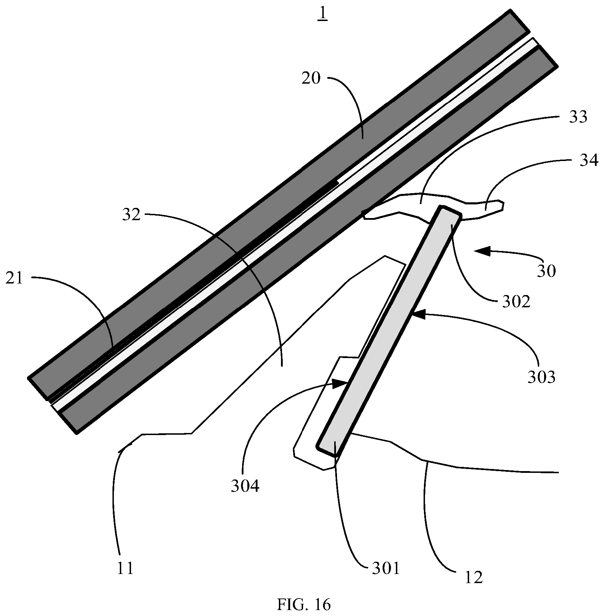

Reference can be made to FIG. 16 again. The panoramic display screen 30 further includes a buffer portion 33. The buffer portion 33 is disposed between the panoramic display screen 30 and the front windshield 20. The buffer portion 33 has a hardness SHORE-A satisfying: SHORE-A ≤ 90.

In this implementation, since both the front windshield 20 and the panoramic display screen 30 are made of hard materials, the buffer portion 33 can prevent breakage caused by hard contact when the front windshield 20 and the panoramic display screen 30 are positioned too close. The buffer portion 33 is made of a thermoplastic polymer having a hardness of SHORE-A less than or equal to 90, which can effectively provide a buffering effect for the panoramic display screen 30. The buffer portion 33 may be fixed to the top end 302 of the panoramic display screen 30 by integral injection molding, or may be fixed to the inner surface of the front windshield 20 by adhesion, or may be fixed to the back light-shielding surface 304 of the panoramic display screen 30 by adhesion. For example, the material of the buffer portion 33 may be polymethyl methacrylate (PMMA), acrylonitrile butadiene styrene (ABS), polyamide (PA), polycarbonate (PC), polyethylene (PE), polypropylene (PP), polystyrene (PS), thermoplastic elastomer (TPE), thermoplastic polyurethane (TPU), PVB, PET, etc.

Optionally, the panoramic display screen 30 further includes a decorative portion 34. The decorative portion 34 is fixed at the top end 302 of the panoramic display screen 30 and extends in a direction away from the front windshield 20. Specifically, the decorative portion 34 may extend in a direction away from the front display surface 303, or may extend onto the front display surface 303, so as to reduce the poor visual effect caused by the abrupt edge, thereby reducing the poor appearance, enhancing the overall aesthetics of the panoramic display screen 30, and providing more personalized appearances. The decorative portion 34 can also reduce the influence of direct external strong light on the panoramic display screen 30, and reduce the interference of partial reflected light from the panoramic display screen 30 to human eyes. The decorative portion 34 and the buffer portion 33 may be integrally formed or configured as a combined structure. The decorative portion can be fixed by means of bonding, attaching, embedding, injection molding, or the like.

Optionally, the light emitted by the panoramic display screen 30 includes at least one of P-polarized light, circularly polarized light, and non-polarized light. When the light emitted by the panoramic display screen 30 includes the P-polarized light, the P-polarized light accounts for at least 30% of the light emitted by the panoramic display screen 30, so that the panoramic display screen 30 is compatible with polarized sunglasses, enabling the occupant to clearly see the display information on the panoramic display screen 30 while wearing polarized sunglasses. For example, the light emitted by the panoramic display screen 30 may contain 30%, or 40%, or 50%, or 60%, or 70%, or 80%, or 90%, or 95%, or even 100% of P-polarized light.

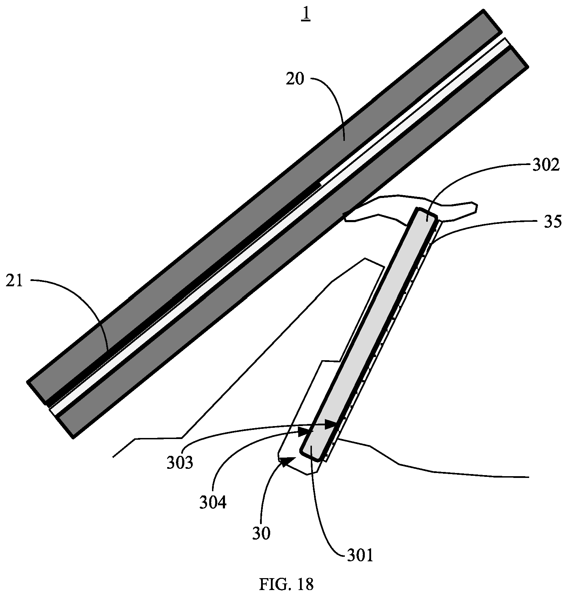

Reference can be made to FIG. 18. The panoramic display screen 30 further includes an optical coating 35. The optical coating 35 is disposed on the front display surface 303 of the panoramic display screen 30. The optical coating 35 includes at least one of a visible light anti-reflective coating (AR coating), an anti-fingerprint coating (AF coating), an anti-glare coating (AG coating), and a composite coating formed by stacking a 1/4 phase retardation plate and a linear polarizing coating. In this implementation, the optical coating 35 can improve the display effect and durability of the panoramic display screen 30. Specifically, when the optical coating 35 includes a visible light anti-reflective coating, the visible light anti-reflective coating can reduce the reflection and scattering of external light by the panoramic display screen 30, and can improve the light transmittance and color restoration ability of the optical surface of the panoramic display screen 30, thereby improving the display effect of the panoramic display screen 30. For example, the material of the visible light anti-reflective coating may be a porous silica coating, a high-low refractive index laminated coating, etc. When the optical coating 35 is the AF coating, the AF coating can improve the anti-fingerprint and anti-oil ability of the surface of the panoramic display screen 30, thereby effectively preventing the residue of fingerprints and oil stains, while also improving the hardness and wear resistance of the optical surface. For example, the AF coating may be a silicone coating, an acrylic coating, a polyurethane coating, a polyacrylate coating, an organosiloxane coating, etc. When the optical coating 35 includes the AG coating, the AG coating can reduce the glare and reflection caused by light reflection on the surface of the panoramic display screen 30, thereby improving the visual comfort and sharpness for the occupant. For example, the AG coating may be a diffuse reflection PET, etc. When the optical coating 35 includes the composite coating formed by stacking the 1/4 phase retardation plate and the linear polarizing coating, external stray light passes through the linear polarizing coating and the 1/4 phase retardation plate, sequentially becoming linearly polarized light and circularly polarized light. After being reflected by a light-emitting diode (OLED) metal cathode, the circularly polarized light becomes circularly polarized light with an opposite rotation direction. Then, after passing through the 1/4 phase retardation coating, the circularly polarized light with the opposite rotation direction becomes linearly polarized light with a vibration direction perpendicular to a polarization direction of the linear polarizing coating. Therefore, the linearly polarized light cannot pass through the linear polarizing coating, thereby suppressing the reflection interference of external ambient light.

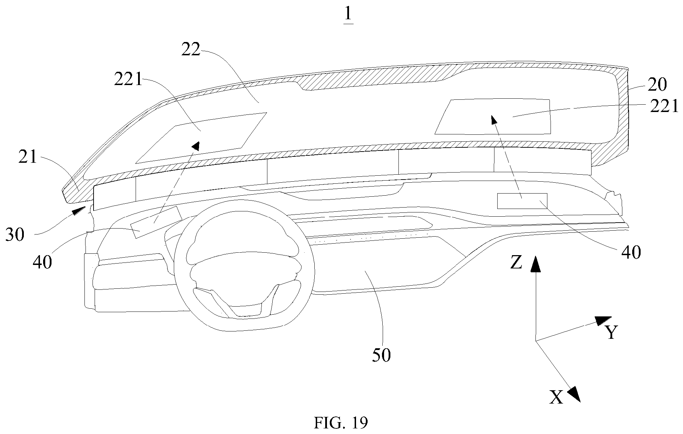

Reference can be made to FIG. 19. The front windshield 20 has a transparent region 22. The transparent region 22 includes at least one head-up display region 221. The vehicle 1 further includes a head-up display system 40. The head-up display system 40 is configured to project a head-up display image onto the head-up display region 221. The panoramic display screen 30 can be used in combination with the head-up display system 40. The head-up display image has a better field of view and a farther virtual image distance than the image displayed on the panoramic display screen 30, thereby providing a better overall immersive driving experience. Preferably, the head-up display system 40 is an augmented reality head-up display (AR-HUD) system, so that the image viewed by the driver is combined with the actual environment. Optionally, there may be one or more head-up display regions 221. The vehicle 1 further includes a central control screen 50. The central control screen 50 is disposed at one side of the dashboard 12 facing away from the front windshield 20. The central control screen 50 is electrically connected to the panoramic display screen 30 and the head-up display system 40. Through the central control screen 50, the panoramic display screen 30 and the head-up display system 40 can be adjusted and controlled, thereby improving the convenience of display adjustment.

Although the embodiments of the present disclosure have been illustrated and described above, it can be understood that the above embodiments are exemplary and cannot be construed as limitations on the present disclosure. Those of ordinary skill in the art can make changes, modifications, substitutions, and variations to the above embodiments within the scope of the present disclosure, and these improvements and refinements are also considered within the scope of protection of the present disclosure.

## Claims

1. A vehicle, comprising:
a vehicle body comprising a bodyshell and a vehicle-body front opening;
a dashboard disposed in an internal space of the bodyshell;
a front windshield, wherein the front windshield is mounted in the vehicle-body front opening, and is angled relative to the dashboard; and
a panoramic display screen, wherein the panoramic display screen has a bottom end and a top end opposite to the bottom end, the bottom end is fixed on the dashboard, the top end is away from the dashboard and is close to the front windshield, and a distance D between the top end and the front windshield satisfies: D ≤ 150 mm.

2. The vehicle of claim 1, wherein the panoramic display screen further has a front display surface and a back light-shielding surface facing away from the front display surface, the back light-shielding surface faces towards the front windshield, the front display surface faces away from the front windshield, the front display surface has an effective display region, and the effective display region is located above the dashboard.

3. The vehicle of claim 2, wherein the back light-shielding surface is black, and the panoramic display screen has a visible light transmittance less than or equal to 1%.

4. The vehicle of claim 1, wherein the front windshield comprises a lower light-shielding layer, the lower light-shielding layer is close to the dashboard, and the lower light-shielding layer has a visible light transmittance less than or equal to 5%.

5. The vehicle of claim 4, wherein the lower light-shielding layer has an upper boundary and a lower boundary opposite to the upper boundary, the lower boundary is close to the dashboard, the upper boundary is close to the top end of the panoramic display screen, and a distance between the upper boundary and an upper surface of the dashboard is greater than or equal to a distance between the top end of the panoramic display screen and the upper surface of the dashboard.

6. The vehicle of claim 1, wherein the panoramic display screen has a curved surface structure and is convex towards the front windshield, and the distance D between the top end and the front windshield satisfies: D ≤ 100 mm, or D ≤ 50 mm, or D ≤ 30 mm, or D ≤ 20 mm, or D ≤ 10 mm, or D ≤ 5 mm.

7. The vehicle of claim 6, wherein in a width direction of the bodyshell, the panoramic display screen has a central region and an end region located at opposite ends of the central region, and a radius of curvature of the central region is greater than a radius of curvature of the end region.

8. The vehicle of claim 7, wherein the radius of curvature of the end region ranges from 300 mm to 1500 mm, and the radius of curvature of the central region ranges from 1500 mm to 10000 mm.

9. The vehicle of claim 1, wherein the panoramic display screen has a first end and a second end opposite to the first end in a width direction of the bodyshell, the first end at least exceeds a plane that both passes through a first eye-position and is parallel to a forward direction of the vehicle, the second end at least exceeds a plane that both passes through a second eye-position and is parallel to the forward direction of the vehicle, the first eye-position is an eye position of an occupant at a first driving seat inside the bodyshell, and the second eye-position is an eye position of the occupant at a second driving seat inside the bodyshell.

10. The vehicle of claim 1, wherein the panoramic display screen has a plurality of display partitions arranged in a width direction of the bodyshell, the panoramic display screen is provided with display units in each of the plurality of display partitions, and display units in different display partitions are independently operatable.

11. The vehicle of claim 10, wherein the panoramic display screen further has at least one transition region, each of the at least one transition region is disposed between two adjacent display partitions of the plurality of display partitions, and a part of the panoramic display screen at the transition region has a minimum radius of curvature less than 300 mm, or less than 200 mm, or less than 100 mm.

12. The vehicle of claim 10, wherein each of the plurality of display partitions has at least one display function, display functions of the plurality of display partitions are switchable with one another, and the display function comprises at least one of providing an indirect field of view, providing vehicle status information, providing a window of an in-vehicle intelligent assistant, and providing social media and intelligent office information.

13. The vehicle of claim 1, wherein the panoramic display screen further comprises a support member; and
the support member is fixedly connected to the panoramic display screen and the vehicle body, or the support member is movably connected to the panoramic display screen and the vehicle body.

14. The vehicle of claim 2, wherein in a vertical plane passing through a reference eye point of a driver and parallel to a forward direction of the vehicle, an angle between a line connecting a midpoint of the effective display region and the reference eye point of the driver and a horizontal line is a look down angle *α,* and the look down angle *α* satisfies: *α* ≤ -5°, or *α* ≤ -8°, or *α* ≤ -10°.

15. The vehicle of claim 2, wherein the effective display region has a top edge and a bottom edge opposite to the top edge, and the bottom edge is closer to the dashboard than the top edge; and
in a vertical plane passing through a reference eye point of a driver and parallel to a forward direction of the vehicle, an angle defined by a line connecting the top edge and the reference eye point of the driver and a line connecting the bottom edge and the reference eye point of the driver is a visible angle *θ*, and the visible angle *θ* satisfies: *θ* ≥ 0.5°, or *θ* ≥ 3°, or *θ* ≥ 5°.

16. The vehicle of claim 2, wherein in a plane passing through a reference eye point of a driver and parallel to a forward direction of the vehicle, an angle between the effective display region and a horizontal line is an attitude angle *β*, and the attitude angle *β* satisfies: 45° ≤ *β* ≤ 150°, or 70° ≤ *β* ≤ 125°, or 75° ≤ *β* ≤ 100°.

17. The vehicle of claim 1, wherein the panoramic display screen further comprises a buffer portion, the buffer portion is disposed between the panoramic display screen and the front windshield, and the buffer portion has a hardness SHORE-A satisfying: SHORE-A ≤ 90.

18. The vehicle of claim 1, wherein light emitted by the panoramic display screen comprises at least one of P-polarized light, circularly polarized light, and non-polarized light, and when the light emitted by the panoramic display screen comprises the P-polarized light, the P-polarized light accounts for at least 30% of the light emitted by the panoramic display screen.

19. The vehicle of claim 2, wherein the panoramic display screen further comprises an optical coating, the optical coating is disposed on the front display surface of the panoramic display screen, and the optical coating comprises at least one of an anti-reflective coating, an anti-fingerprint coating, an anti-glare coating, and a composite coating formed by stacking a 1/4 phase retardation plate and a linear polarizing coating.

20. The vehicle of claim 1, wherein the front windshield has a transparent region, and the transparent region comprises at least one head-up display region; and the vehicle further comprises a head-up display system, and the head-up display system is configured to project a head-up display image onto the head-up display region.
